# Europäisches Patentamt
## European Patent Office
### Office européen des brevets

(19)

(11) Veröffentlichungsnummer: **0 209 695**
**B1**

(12) # EUROPÄISCHE PATENTSCHRIFT

(45) Veröffentlichungstag der Patentschrift:
**04.10.89**

(21) Anmeldenummer: **86107756.8**

(22) Anmeldetag: **06.06.86**

(51) Int. Cl.⁴: **H 04 N 5/46**

(54) Schaltungsanordnung zum Empfang von Fernsehsignalen.

(30) Priorität: **27.06.85 DE 3522914**

(43) Veröffentlichungstag der Anmeldung:
**28.01.87 Patentblatt 87/5**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**EP-A-0 065 150**
**CH-A-316 989**

(73) Patentinhaber: **Deutsche Thomson- Brandt GmbH,
Hermann- Schwer- Strasse 3 Postfach 1307,
D-7730 Villingen- Schwenningen (DE)**

(72) Erfinder: **Maier, Gerhard, Reutestrasse 19, D-7735
Dauchingen (DE)**
Erfinder: **Fischer, Bertram, Reuteweg 17, D-7212
Deisslingen (DE)**

EP 0 209 695 B1

## Beschreibung

Die Erfindung geht aus von einer Schaltungsanordnung zum Empfang von nach der B/G- und L-Norm ausgesendeten Fernsehsignalen

Es ist bekannt, daß bei der (französichen) L-Norm im Band I der Tonträger in der Frequenz um 6,5 MHz niedriger als der Bildträger ausgesendet wird. In sämtlichen anderen Bändern des Empfangsbereichs liegen die Tonträger höher als die Bildträger, abgesehen vom Frequenzabstand (6,5 MHz) wie bei den Normen B und G (5,5 MHz). Um ein Gerät zu bauen, welches für den Empfang verschiedener Normen geeignet ist, gibt es zahlreiche Möglichkeiten. Man kann zwei getrennte Tuner mit diesen angepassten Zwischenfrequenzverstärkern verwenden. Es können auch zwei getrennte Oberflächenwellenfilter in Verbindung mit einem geschalteten ZF-Baustein eingesetzt werden. Bei diesen ZF-Bausteinen müssen dann die Referenz-Kreise zugleich mit den AM-ZF-Verstärkern umschaltbar sein. Letztere Versionen verändern jedoch das Sprung- und Gruppenlaufzeitverhalten in nachteiliger Weise. Außerdem sind die bekannten Konzepte vom Aufbau her wegen der doppelten Verwendung von Bauteilen teuer.

Es ist z. B. bekannt, eine Schaltungsanordnung zum Empfang von Fernsehsignalen mit zwei Mischstufen und zwei Oszillatoren zu versehen. (CH-A-316 989).

Diese Patentschrift bezieht sich auf das Problem, auf welche Weise sowohl das Tonsignal der Kanäle 1 bis 11 als auch dasjenige des Kanals 12 am besten empfangen werden kann, wenn die Tonzwischenfrequenz bei den Kanälen 1 bis 11 5,5 MHz und bei Kanal 12 11,15 MHz beträgt. Es ist eine zweite Mischstufe vorgesehen, die für die Kanäle 1 bis 12 ständig in Betrieb ist, wobei die Wahl der Frequenz des zweiten Oszillators derart getroffen wird, daß deren Harmonische keine Störungen in den zu empfangenden Fernsehkanälen hervorrufen.

Der Erfindung liegt die Aufgabe zugrunde, ein Multistandard-Gerät unter starker Kostenreduzierung zu ermöglichen, welches ohne großen Aufwand in der Lage ist, Signale nach der L-Norm als auch nach der B/G-Norm zu empfangen. Diese Aufgabe wird durch die im Patentanspruch 1 angegebene Erfindung gelöst.

Nachstehend wird die Erfindung an einem Ausführungsbeispiel mit Hilfe der Zeichnung erläutert.

Figur 1　zeigt die Diagramme zur Erläuterung des der Erfindung zugrunde liegenden Problems;

Figur 2　zeigt ein Blockschaltbild der Erfindung;

Figur 3　zeigt ein ausführliches Schaltbild der Erfindung.

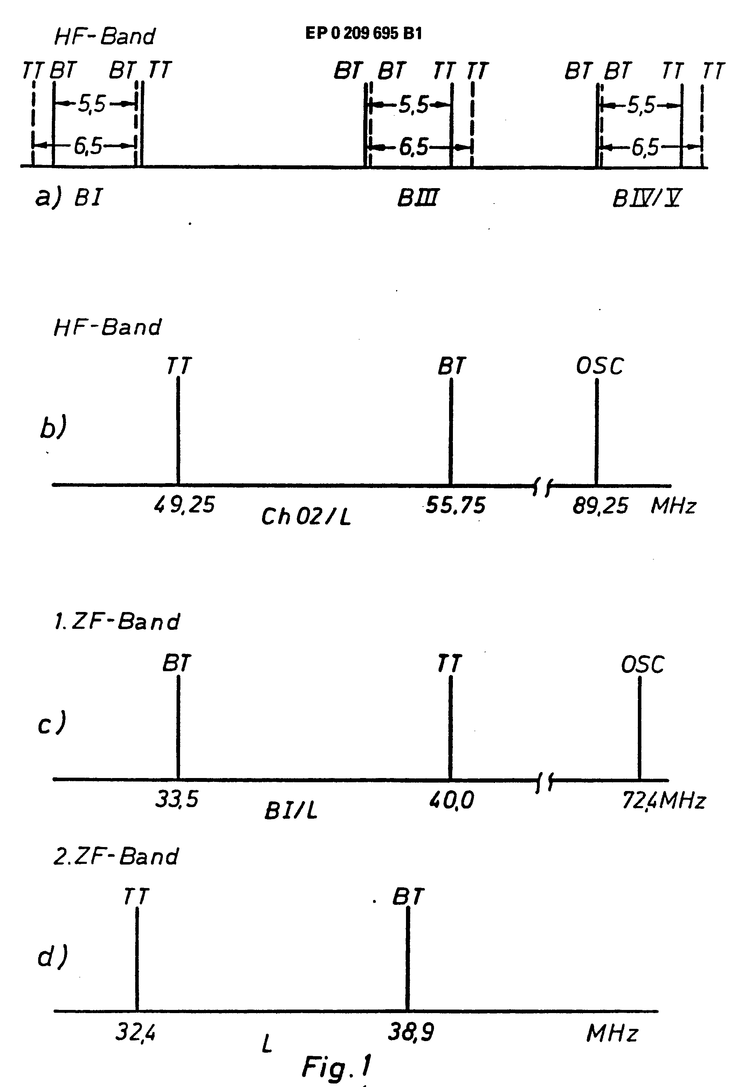

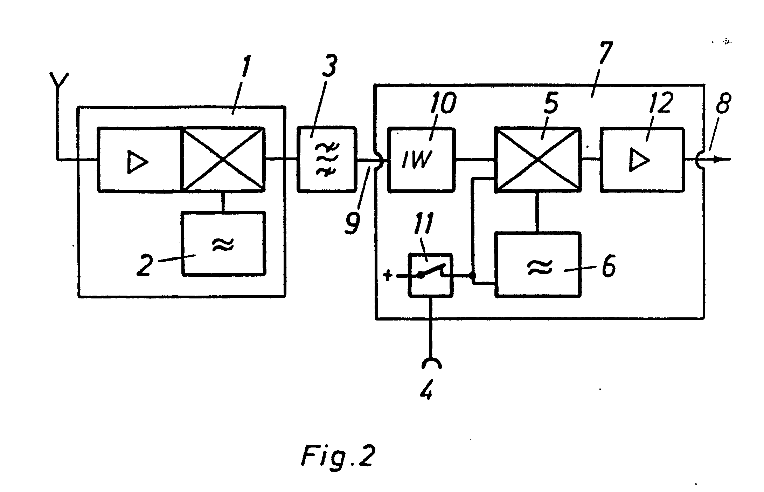

In Figur 1 sind die Frequenzen im HF-Bereich für die Normen B/G und L aufgetragen. Abgesehen vom unterschiedlichen Frequenzabstand von Bildträger und Tonträger unterscheiden sich die Normen in den Bändern III, IV und V nicht. Im Band I jedoch ist zu erkennnen, daß der Tonträger der L-Norm unterhalb vom Bildträger liegt (gestrichelt gezeichnet, Figur 1a). Damit dieses Band unter Verwendung der übrigen Verstärker und Filter weiter verarbeitet werden kann, muß das Signal der L-Norm umgebildet werden. Dieses geschieht mit einer Schaltungsanordnung nach Figur 2. Das am Eingang des Tuners 1 liegende Band I-Signal der L-Norm (Figur 1b) wird durch Einstellen des Oszillators 2 derart umgesetzt, daß am Ausgang des ZF-Filters 3 Tonträger auf 40 MHz und der Bildträger auf 33,5 MHz liegt (Figur 1c). Nun wird durch eine am Steuer-Eingang 4 angelegte Schaltinformation über eine Schaltstufe 11 eine passive Mischstufe 5 eingeschaltet, die diese Frequenzen mit einer ebenfalls durch die Schaltinformation eingeschalteten Oszillatorfrequenz eines Oszillators 6 mischt. Diese Frequenz liegt bei 72,4 MHz (Figur 1c). Die Mischstufe 5 ist zswischen einem Impedanzwandler 10 und einem stromgegengekoppelten Verstärker 12 eingeschaltet, an dessen Ausgang 8 die Frequenzen 38,9 MHz für den Bildträger und 32,4 MHz für den Tonträger entnehmbar sind (Figur 1d). Diese Frequenzen befinden sich in der gleichen Lage wie die der übrigen Normen, so daß die anschließenden Baugruppen wie Verstärker und Filter verwendet werden können.

Die Dämpfung der zusätzlichen Mischstufe 5 für die beiden ersten Zwischenfrequenzen für Bildträger und Tonträger ist so groß, daß ein genügender Störabstand zwischen der ersten und der zweiten Zwischenfrequenz entsteht, der insbesondere durch die anschließenden Filter noch verbessert wird.

Bei Empfang der übrigen Normen wird die Mischstufe 5 durch die Schaltinformation praktisch überbrückt, so daß die erste Zwischenfrequenz ohne nennenswerte Verluste durchgeschleift wird. Der Oszillator 6 wird dabei außer Betrieb gesetzt.

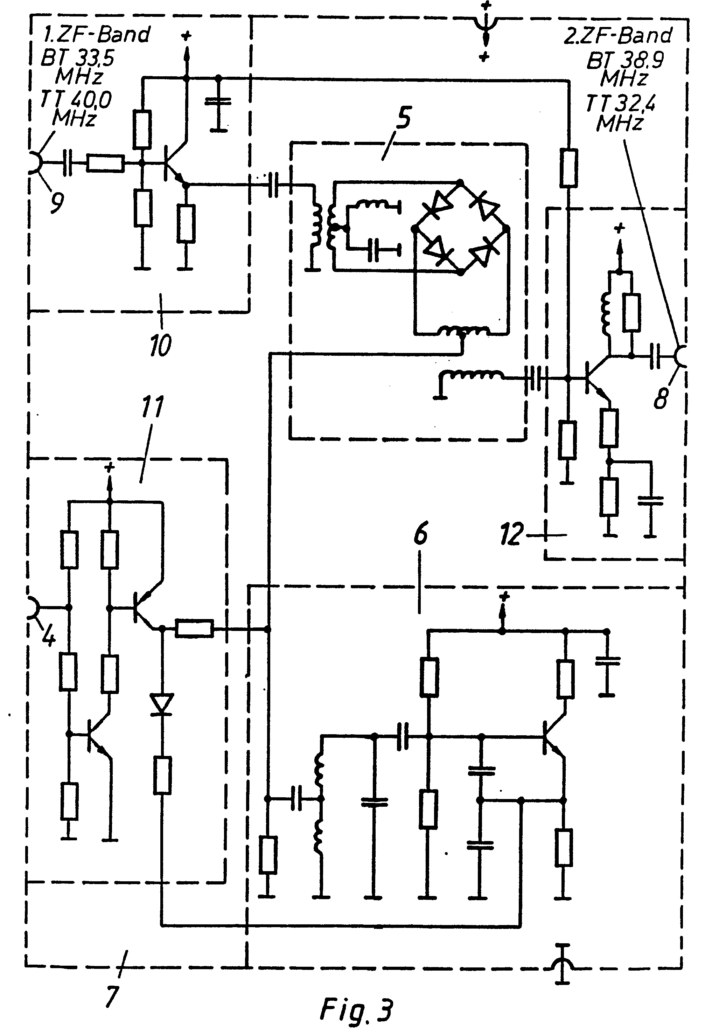

In Figur 3 ist ein detailliertes Schaltbild des Blockes 7 der Figur 2 angegeben, bei welchem die in Figur 2 angedeuteten Blöcke mit entsprechend gleichen Bezugszeichen versehen sind.

Das am Eingang 9 zugeführte Zwischenfrequenzsignal (ZF1) wird im Band I-Betrieb der L-Norm an eine Impedanzwandler 10 geschaltet, von dem aus es auf die Mischstufe 5 gelangt, die im gezeigten Beispiel als balancierter passiver Ringmischer dargestellt ist. Die von dem Oszillator 6 erzeugte feste Oszillatorfrequenz von 72,4 MHz wird auf den anderen Eingang der Mischstufe 5 gegeben. Die sich als zweite Zwischenfrequenz ZF2 ergebende Mischprodukte können für eine weitere Verarbeitung in geeigneter Frequenzlage über einen stromgegengekoppelten Verstärker 12 am Ausgang 8 abgenommen werden.

Um bei Empfang der anderen Frequenzbänder das Signal unbeeinflußt durch den Block 7 durchzuschleifen, wird durch die Schaltinformation z. B. ein bestimmtes positives Potential am Eingang 4 über die Schaltstufe 11 erstens die Mischstufe 5 außer Betrieb gesetzt und zweitens der Oszillator 6 abgeschaltet.

**Patentansprüche**

1. Schaltungsanordnung zum Empfang von nach der B/G- und L-Norm ausgesendeten Fernsehsignalen, dadurch gekennzeichnet, daß bei Empfang eines nach der L-Norm im Band I ausgesendeten Fernsehsignals der Tuneroszillator (2) für die Kanäle 02, für den Tonträger mit 49,25 MHz und den Bildträger mit 55,75 MHz und 03 für den Tonträger mit 57,25 MHz und den Bildträger mit 63,75 MHz derart eingestellt ist, daß ein erstes Zwischenfrequenzband (ZF1) von 33,5 ± 1,5 MHz für den Bildträger und 40 ± 1,5 MHz für den Tonträger entsteht, die auf eine passive Mischstufe (5) geschaltet sind und mit einer von einem Oszillator (6) gelieferten Oszillatorfrequenz von 72,4 ± 1,5 MHz zu einem zweiten Zwischenfrequenzband (ZF2) für den Bildträger mit 38,9 MHz und für den Tonträger mit 32,4 MHz gemischt am Ausgang (8) abnehmbar sind, wodurch ein dem der restlichen Standard-L-Bänder identisches Zwischenfrequenzband entsteht, und daß bei Empfang von nach der B/G-Norm im Band I ausgesendeten Fernsehsignalen durch eine Schaltinformation die Mischstufe (5) überbrückt und der Oszillator (6) außer Betrieb gesetzt wird.

2. Schaltungsanordnung nach Anspruch 1, dadurch gekennzeichnet, daß die Mischstufe (5) für die restlichen Bänder III, IV/V sowohl für die L- als auch B/G-Betriebsart mittels einer Schaltinformation überbrückt ist und gleichzeitig der Oszillator (6) außer Betrieb gesetzt wird.

3. Schaltungsanordnung nach Anspruch 1, dadurch gekennzeichnet, daß die Mischstufe (5) zwischen einem Impedanzwandler (10) und einem stromgegengekoppelten Verstärker (12) eingeschaltet ist.

**Claims**

1. A circuit arrangement for receiving television signals transmitted in accordance with the B/G and L standard, characterised in that when receiving a television signal transmitted in accordance with the L standard in the I band, the tuner oscillator (2) for the channels 02, for the sound carrier at 49.25 MHz and the picture carrier at 55.75 MHz and 03 for the sound carrier at 57.25 MHz and the picture carrier at 63.75 MHz is set such that a first intermediate frequency band (ZF1) of 33.5 +/- 1.5 MHz is created for the picture carrier and 40 +/- 1.5 MHz for the sound carrier, which are connected to a passive mixing stage (5) and, mixed with an oscillator frequency of 72.4 +/- 1.5 MHz delivered by an oscillator (6) to a second intermediate frequency band (ZF2), may be tapped mixed at the output (8) for the picture carrier with 38.9 MHz and for the sound carrier with 32.4 MHz, whereby an intermediate frequency band identical to that of the remaining standard L bands is created, and that when receiving television signals transmitted in accordance with the B/G standard in the I band the mixing stage (5) is bypassed by a switching instruction and the oscillator (6) is put out of operation.

2. A circuit arrangement according to claim 1, characterised in that the mixing stage (5) for the remaining III, IV/V bands and for the L and B/G mode of operation is bypassed with the aid of a switching instruction and at the same time the oscillator (6) is put out of operation.

3. A circuit arrangement according to claim 1, characterised in that the mixing stage (5) is connected in between an impedance converter (10) and a negative feedback current amplifier (12).

**Revendications**

1. Montage pour la réception de signaux de télévision émis selon la norme B/G et selon la norme L, caractérisé en ce que, lors de la réception d'un signal de télévision émis selon la norme L dans la bande I, l'oscillateur de syntonisation (2) est réglé pour le canal 02 pour la porteuse son possédant une fréquence de 49,25 MHz et pour la porteuse image possédant une fréquence de 55,75 MHz, et sur le canal 03 pour la porteuse son possédant une fréquence de 57,25 MHz et pour la porteuse image possédant une fréquence de 63,75 MHz, de sorte qu'il existe une première bande de fréquences intermédiaires (ZF1) correspondant à 33,5 ± 1,5 MHz pur la porteuse image et à 40 ± 1,5 MHz pour la porteuse son, ces porteuses étant appliquées à un étage mélangeur passif (5) et pouvant être prélevées sur la sortie (8) en étant mélangées à une fréquence de 72,4 ± 1,5 MHz délivrée par un oscillateur (6), pour obtenir une seconde bande de fréquences intermédiaires (ZF2) pour la porteuse image d'une fréquence de 38,9 MHz et pour la porteuse son d'une fréquence de 32,4 MHz, ce qui permet d'obtenir une bande de fréquences intermédiaires, identique aux bandes L standards résiduelles, et que lors de la réception de signaux de télévision émis selon la norme B/G dans la bande I, l'étage mélangeur (5) est shunté par une information de commutation et l'oscillateur (6) est mis hors service.

2. Montage selon la revendication 1, caractérisé en ce que l'étage mélangeur (5) pour les bandes III, IV/V ainsi que pour les types de fonctionnement L et B/G est shunté au moyen d'une information de commutation et que simultanément l'oscillateur (6) est mis hors service.

3. Montage selon la revendication 1, caractérisé en ce que l'étage mélangeur (5) est branché entre un transformateur d'impédance (10) et un amplificateur (12) à contre-réaction de courant.

Fig. 1

*Fig.2*

**1.ZF-Band**
BT 33,5 MHz
TT 40,0 MHz

**2.ZF-Band**
BT 38,9 MHz
TT 32,4 MHz

*Fig. 3*